# EUROPÄISCHE PATENTSCHRIFT

(11) **EP 2 831 460 B1**
(45) Veröffentlichungstag und Bekanntmachung des Hinweises auf die Patenterteilung: **09.09.2020**
(21) Anmeldenummer: 13712202.4
(22) Anmeldetag: 21.03.2013
(51) Int. Cl.: F16D 65/18, F16D 65/66

(54) **VERSCHLEIßNACHSTELLVORRICHTUNG EINER SCHEIBENBREMSE UND ENTSPRECHENDE SCHEIBENBREMSE**
WEAR ADJUSTMENT DEVICE FOR A DISC BRAKE AND CORRESPONDING DISC BRAKE
DISPOSITIF DE RATTRAPAGE D'USURE D'UN FREIN À DISQUE ET FREIN À DISQUE CORRESPONDANT

(30) Priorität: 26.03.2012 DE 102012102577
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: KLINGNER, Matthias, 82272 Moorenweis (DE); CAMILO-MARTINEZ, Jose, 82008 Unterhaching (DE); STAAHL, Christian, 81929 München (DE); MILLER, Bernhard, 71263 Weil der Stadt (DE); TRIMPE, Robert, 82234 Weißling (DE)
(86) Internationale Anmeldenummer: PCT/EP2013/055872
(87) Internationale Veröffentlichungsnummer: WO 2013/143955

(56) Entgegenhaltungen:
- WO-A1-02/088562
- WO-A2-02/14127

## Beschreibung

Die Erfindung betrifft eine Verschleißnachstellvorrichtung einer Scheibenbremse, insbesondere für ein Kraftfahrzeug, nach dem Oberbegriff des Anspruchs 1. Die Erfindung bezieht sich auch auf eine entsprechende Scheibenbremse.

Derartige Scheibenbremsen sind üblicherweise druckluftbetätigt und mit automatisch wirkenden, mechanischen Verschleißnachstellvorrichtungen ausgestattet. Diese Verschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Belagverschleißnachstellvorrichtung z.B. durch eine Verstellbewegung von längenveränderlichen Druckstempeln. Ein Lüftspiel, das z.B. durch Wärmeausdehnung zu gering geworden ist, können sie jedoch nicht vergrößern.

Damit die automatische Nachstellung nicht ein zu kleines Lüftspiel einstellt, wird im Antrieb der Verschleißnachstellvorrichtung ein Spalt vorgehalten. Somit wird die Verschleißnachstellvorrichtung erst nach Überbrückung dieses Spalts, der auch als konstruktives Lüftspiel bezeichnet wird, angetrieben.

Ein Beispiel einer Nachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet.

Dokument WO02/088562 A1 offenbart eine Verschleißnachstellvorrichtung nach dem Oberbegriff des Anspruchs 1.

Die Aufgabe der vorliegenden Erfindung besteht darin, eine verbesserte Verschleißnachstellvorrichtung zu schaffen.

Eine weitere Aufgabe ist, eine verbesserte Scheibenbremse bereitzustellen.

Die Aufgabe wird durch eine Verschleißnachstellvorrichtung mit den Merkmalen des Anspruchs 1, und eine Scheibenbremse mit den Merkmalen des Anspruchs 12 gelöst.

Es wird eine Verschleißnachstellvorrichtung bereitgestellt, welche bidirektional ausgebildet ist. Damit kann ein Lüftspiel nicht nur verkleinert, sondern auch vergrößert werden.

Eine erfindungsgemäße Verschleißnachstellvorrichtung zum Einstellen eines vorher festgelegten Lüftspiels für eine Scheibenbremse, insbesondere für ein Kraftfahrzeug, umfasst eine Zuspannvorrichtung, vorzugsweise mit einem Drehhebel, wobei die Verschleißnachstellvorrichtung mit der Zuspannvorrichtung, vorzugsweise mit dem Drehhebel, koppelbar und vorzugsweise in eine Spindeleinheit der Scheibenbremse einsetzbar ist. Die Verschleißnachstellvorrichtung ist zum Einstellen des vorher festgelegten Lüftspiels für eine Verkleinerung eines aktuellen Lüftspiels, das in Bezug auf das vorher festgelegte Lüftspiels einen vorher festlegbaren Grenzwert überschritten hat, in einer Nachstelldrehrichtung und zur Vergrößerung eines aktuellen Lüftspiels, das in Bezug auf das vorher festgelegte Lüftspiels einen vorher festlegbaren Grenzwert unterschritten hat, in einer zu der Nachstelldrehrichtung entgegengesetzten Rückstelldrehrichtung bidirektional verdrehbar ausgebildet.

Unter dem Begriff "Einstellen" ist sowohl ein Verkleinern des aktuellen Lüftspiels als auch ein Vergrößern des aktuellen Lüftspiels zu verstehen.

Unter dem Begriff "bidirektional" ist zu verstehen, dass die Verschleißnachstellvorrichtung in einer Nachstelldrehrichtung und in einer zu der Nachstelldrehrichtung entgegengesetzten Rückstelldrehrichtung verdrehbar ist.

Die Verschleißnachstellvorrichtung ist in der Lage, sowohl eine Lüftspielverkleinerung als auch eine Lüftspielvergrößerung zu bewirken.

Das nominelle, vorher festgelegte Lüftspiel, kann automatisch wieder eingestellt werden, unabhängig davon, ob das aktuelle Lüftspiel zuvor zu groß oder zu klein war.

Gemäß der Erfindung ist die Verschleißnachstellvorrichtung für eine Umschaltung einer Drehrichtungsumkehr von der Nachstelldrehrichtung in die zu der Nachstelldrehrichtung entgegengesetzten Rückstelldrehrichtung während eines Betätigungsvorgangs ausgebildet. Die Verschleißnachstellvorrichtung ist somit in der Lage, sich von zwei Seiten - aufgrund ihrer bidirektionalen Ausführung - dem nominellen, vorher festgelegten Lüftspiel als Grenzwert anzunähern. Durch eine entsprechende Häufigkeit von Betätigungen der Scheibenbremse kann das vorher festgelegte Lüftspiel somit konstant gehalten werden.

Ob in Summe eine Vergrößerung oder Verkleinerung erfolgt, kann durch ein festes Verhältnis eines das Lüftspiel vergrößernden Betätigungshubs und eines das Lüftspiel verkleinernden Betätigungshubs gesteuert werden. Dazu kann in einer weiteren Ausführung ein festes Verhältnis zwischen der Verkleinerung und der Vergrößerung des aktuellen Lüftspiels vorher festlegbar sein. Dies ist z.B. durch die geometrische Auslegung der Funktionseinheiten der Verschleißnachstellvorrichtung möglich.

In einer Ausführung sind weist die Verschleißnachstellvorrichtung mindestens ein Nachstellantriebsrad, welches für die Verdrehung der Verschleißnachstellvorrichtung in der Nachstelldrehrichtung vorgesehen ist, mindestens ein Rückstellantriebsrad, das für die Verdrehung der Verschleißnachstellvorrichtung in der Rückstelldrehrichtung vorgesehen ist, und ein Antriebelement, welches gleichzeitig mit der Zuspannvorrichtung, vorzugsweise mit dem Drehhebel, koppelbar und mit dem mindestens einen Nachstellantriebsrad und dem mindestens einen Rückstellantriebsrad in Wirkverbindung steht, aufweist. Auf diese Weise können beide Antriebsräder durch den Drehhebel angetrieben werden. Der Antrieb erfolgt sofort bei Beginn eines Betätigungshubs beim Zuspannen der Bremse. Es ist kein konstruktives Lüftspiel erforderlich.

In einer Ausführung sind das mindestens eine Nachstellantriebsrad und das mindestens eine Rückstellantriebsrad mit einer Antriebswelle der Verschleißnachstellvorrichtung gekoppelt. Wenn z.B. zwei oder mehr Nachstellantriebsräder vorgesehen sind, kann von diesen mindestens ein Nachstellantriebsrad mit der Antriebswelle gekoppelt sein. Somit ergibt sich ein kompakter Aufbau.

In einer weiteren Ausführung ist das mindestens eine Nachstellantriebsrad über einen Nachstellfreilauf mit der Antriebswelle gekoppelt, wobei das mindestens eine Rückstellantriebsrad über einen Rückstellfreilauf und über eine Getriebeeinheit mit der Antriebswelle gekoppelt sind, wobei die Getriebeeinheit für eine Drehrichtungsumkehr ausgebildet ist. Dadurch sind zwei entgegengesetzte Drehrichtungen durch einen gemeinsamen Antrieb möglich. Zur Drehrichtungsumkehr kann beispielsweise ein Planetengetriebe als Getriebeeinheit verwendet werden. Das Planetengetriebe bietet einen platzsparenden Aufbau. Es sind aber auch andere Getriebearten möglich. Die Kopplung über Freiläufe ermöglicht unabhängige Drehbewegungen.

In einer noch weiteren Ausführung ist vorgesehen, dass das Antriebelement zur Umwandlung einer Schwenkbewegung in eine lineare Hubbewegung ausgebildet ist. Damit wird eine einfache Ankopplung an die Zuspannvorrichtung geschaffen.

In einer Ausführung ist das Antriebelement mit mindestens einer Nachstellverzahnung als Wirkverbindung mit dem mindestens einen Nachstellantriebsrad und einer Rückstellverzahnung als Wirkverbindung mit dem mindestens einen Rückstellantriebsrad versehen. Damit wird es ermöglicht, dass der Betätigungshub auf beide Antriebsräder so übertragen wird, dass erst ein Rückstellen und danach ein Nachstellen möglich sind. Mit der geometrischen Anordnung der Verzahnungen auf dem Antriebelement sind ein Rückstellvorgang und ein Nachstellvorgang beeinflussbar. Die Verzahnungen können z.B. Zahnstangen, eingeformt oder als separate Bauteile ausgeführt sein.

Ein besonderer Vorteil dabei ist, dass das konstruktive Lüftspiel nicht über Spalte zwischen Bauteilen bestimmt wird. Das tatsächlich eingestellte Lüftspiel ist somit bezüglich Bauteil- und Positionstoleranzen weniger empfindlich.

In einer alternativen Ausführung weist das Antriebelement mindestens eine Nachstellverzahnung auf und die Verschleißnachstellvorrichtung weist mindestens ein aus einem Zustand in einen anderen Zustand schaltbares Antriebsrad auf, welches in dem einen Zustand in Wirkverbindung mit dem mindestens einen Rückstellantriebsrad und in dem anderen Zustand in Wirkverbindung mit dem mindestens einen Nachstellantriebsrad steht, wobei das mindestens eine schaltbare Antriebsrad ständig in Wirkverbindung mit der mindestens einen Nachstellverzahnung des Antriebelementes steht. Somit ist nur ein gemeinsames anzutreibendes Antriebsrad erforderlich, was Bauraum spart und Einstell- und Positioniergenauigkeit erleichtert.

In einer weiteren Ausführung ist mindestens ein schaltbares Antriebsrad mit einem Schaltelement gekoppelt, welches mit dem Antriebelement in Wirkverbindung steht. Dazu weist das Antriebelement eine Nachstellverzahnung als Wirkverbindung mit dem mindestens einen Antriebsrad und eine Führungsnut in Wirkverbindung mit dem Schaltelement auf. Es ist nur eine Verzahnung erforderlich. Die Führungsnut ist einfach herstellbar und kann den Schaltvorgang durch geeignete Gestaltung einfach beeinflussen.

Eine erfindungsgemäße Scheibenbremse, vorzugsweise druckluftbetätigt, insbesondere für ein Kraftfahrzeug, mit einer Zuspannvorrichtung, vorzugsweise mit einem Bremsdrehhebel, mindestens einer Spindeleinheit, und mindestens einer Verschleißnachstellvorrichtung, welche mit der Zuspannvorrichtung, vorzugsweise mit dem Bremsdrehhebel, gekoppelt und in die mindestens eine Spindeleinheit der Scheibenbremse eingesetzt ist, weist die oben beschriebene bidirektionale Verschleißnachstellvorrichtung auf.

Die erfindungsgemäße Verschleißnachstellvorrichtung bietet die Möglichkeit zur Lüftspielvergrößerung. Während eines Betätigungshubs sind zwei Drehrichtungen mit mindestens einer Drehrichtungsumkehrung möglich. Dadurch ist eine übliche Größe und Schlankheit der Verschleißnachstellvorrichtung beibehalten und sie kann in die Spindeleinheit eingesetzt werden.

Die Erfindung wird nun anhand beispielhafter Ausführungen mit Bezug auf die beigefügten Zeichnungen näher erläutert. Hierbei zeigen:
- Fig. 1: eine schematische Schnittansicht eines ersten Ausführungsbeispiels einer erfindungsgemäßen Scheibenbremse mit einer erfindungsgemäßen Verschleißnachstellvorrichtung;
- Fig. 2: eine schematische grafische Darstellung eines Verstellwegs in Abhängigkeit eines Betätigungshubs;
- Fig. 3: eine schematische grafische Darstellung eines Eintaktverhaltens der erfindungsgemäßen Verschleißnachstellvorrichtung;
- Fig. 4: eine schematische Längsschnittansicht eines ersten Ausführungsbeispiel der erfindungsgemäßen Verschleißnachstellvorrichtung;
- Fig. 5: eine schematische Perspektivansicht des ersten Ausführungsbeispiels nach Fig. 4;
- Fig. 6: eine schematische Perspektivansicht eines Antriebelementes des ersten Ausführungsbeispiels nach Fig. 4;
- Fig. 7: eine schematische Perspektivansicht des Antriebelementes in einer anderen Blickrichtung mit der erfindungsgemäßen Verschleißnachstellvorrichtung nach dem ersten Ausführungsbeispiel nach Fig. 4;
- Fig. 8: eine schematische Perspektivansicht eines zweiten Ausführungsbeispiels der erfindungsgemäßen Verschleißnachstellvorrichtung;
- Fig. 9: eine schematische Perspektivansicht eines Antriebelementes des zweiten Ausführungsbeispiels nach Fig. 8; und
- Fig. 10: eine schematische Perspektivansicht des Antriebelementes in einer anderen Blickrichtung mit der erfindungsgemäßen Verschleißnachstellvorrichtung nach dem zweiten Ausführungsbeispiel nach Fig. 8.

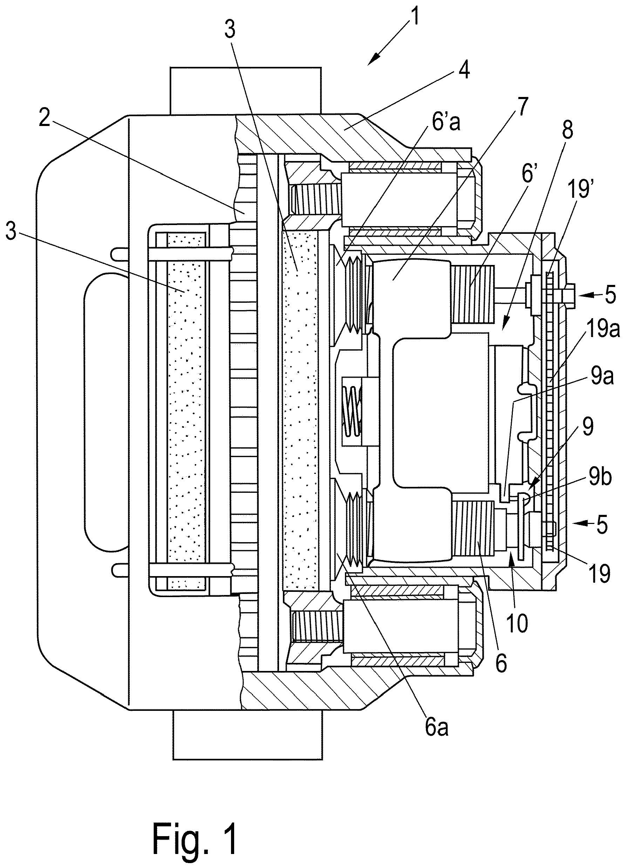

In Fig. 1 ist eine schematische Schnittansicht eines Ausführungsbeispiels einer erfindungsgemäßen Scheibenbremse 1 mit einer erfindungsgemäßen Verschleißnachstellvorrichtung 10 dargestellt.

In der Fig. 1 sind die folgenden Komponenten angegeben: Scheibenbremse 1, Bremsscheibe 2, Bremsbeläge 3, Bremssattel 4, Spindeleinheit 5, 5', Druckstempel 6, 6', Druckstücke 6a, 6'a, Traverse 7, und Drehhebel 8. Der Bremssattel 4 ist hier als Schwimmsattel ausgeführt. Andere Ausführungen sind möglich.

Die Scheibenbremse 1 kann unterschiedliche Kraftantriebe aufweisen. Der Drehhebel 8 wird hier z.B. pneumatisch betätigt. Zu Aufbau und Funktion einer pneumatischen Scheibenbremse 1 wird auf die entsprechende Beschreibung der DE 197 29 024 C1 verwiesen.

Die Scheibenbremse 1 ist hier in einer Ausführung als zweistempelige Bremse gezeigt. Der Bremssattel 4 übergreift die Bremsscheibe 2, an welcher beidseitig die Bremsbeläge 3 angeordnet sind. Der zuspannseitige Bremsbelag 3 steht mit den Spindeleinheiten 5, 5' über die Druckstücke 6a, 6'a in Verbindung, der andere Bremsbelag ist auf der anderen Seite der Bremsscheibe im Bremssattel 4 festgelegt. Die Verschleißnachstellvorrichtung 10 ist hier in die eine Spindeleinheit 5 der beiden Spindeleinheiten 5, 5' eingesetzt und steht über einen Antrieb 9 mit dem Drehhebel 8 in Zusammenwirkung. Der Antrieb 9 umfasst einen Betätiger 9a, welcher mit dem Drehhebel 8 verbunden ist, und einen Mitnehmer 9b, der mit der Verschleißnachstellvorrichtung 10 in Verbindung steht.

Die Verschleißnachstellvorrichtung 10 ist hier als mechanische Verschleißnachstellvorrichtung ausgebildet. Sie weist außerdem ein Synchronrad 19 auf, welches über ein Synchronmittel 19a, z.B. eine Kette, mit einem weiteren Synchronrad 19' der anderen Spindeleinheit 5' zusammenwirkt. Damit ist eine synchrone Bewegung der Spindeleinheiten 5 und 5' bei Verschleißnachstellvorgängen gewährleistet.

Ein Abstand zwischen den Bremsbelägen 3 und der Bremsscheibe 2 wird als Lüftspiel bezeichnet. Infolge von Belag- und Scheibenverschleiß wird dieses Lüftspiel größer. Wenn dies nicht kompensiert wird, kann die Scheibenbremse 10 ihre Spitzenleistung nicht erreichen, da der Betätigungshub der Betätigungsmechanik, d.h. hier der Betätigungshub bzw. ein Schwenkwinkel des Drehhebels 8 nicht mehr ausreicht.

Unter dem Begriff "Verstellung" bzw. "Verstellen" bzw. "Einstellen" ist hierbei sowohl ein Zustellen, d.h. Nachstellen, in Richtung auf die Bremsscheibe zur Verkleinerung des Lüftspiels als auch ein Rückstellen von der Bremsscheibe weg zur Vergrößerung des Lüftspiels zu verstehen.

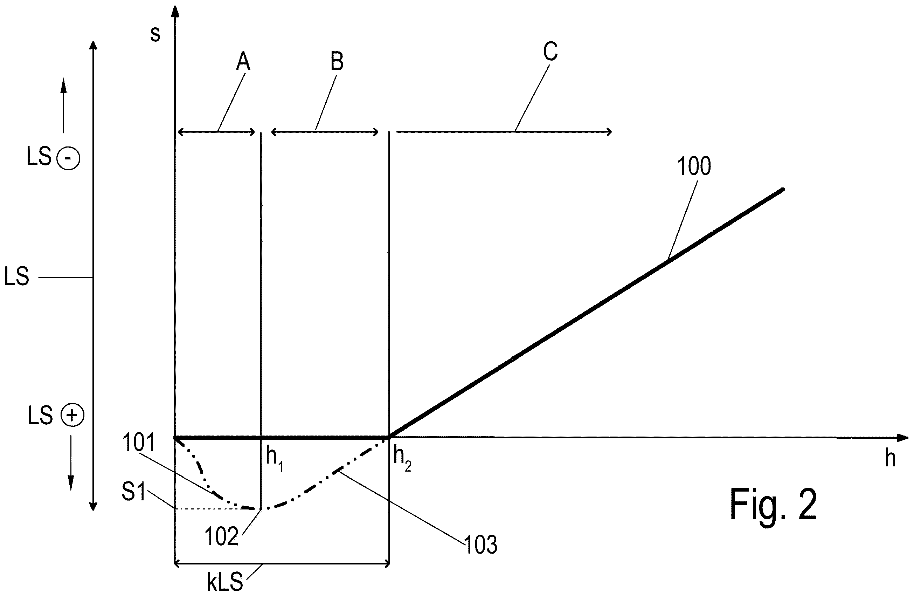

Die erfindungsgemäße Verschleißnachstellvorrichtung 10, die unten noch ausführlich beschrieben wird, kann sowohl eine Lüftspielverkleinerung als auch eine Lüftspielvergrößerung bewirken. Dazu zeigt Fig. 2 eine schematische grafische Darstellung eines Verstellwegs s der Verschleißnachstellvorrichtung 10 in Abhängigkeit des Betätigungshubs h.

In Fig. 2 ist der Verstellweg s auf der Ordinate und der Betätigungshub h auf der Abszisse aufgetragen. Ein Lüftspiel LS ist parallel zur Ordinate mit dem Verstellweg s hinzugefügt, wobei größeren Werten des Verstellwegs s umgekehrt ein verkleinertes Lüftspiel LS zugeordnet ist (durch das Minuszeichen angedeutet). Ebenso ist kleineren Werten des Verstellwegs s umgekehrt ein vergrößertes Lüftspiel LS zugeordnet, was durch ein Pluszeichen angedeutet ist.

Üblicherweise wird ein konstruktives Lüftspiel, das ein vorher festgelegtes Lüftspiel ist und in Fig. 2 mit kLS bezeichnet ist, durch eine Spalte zwischen Bauteilen, z.B. Betätiger 9a und Mitnehmer 9b in Fig. 1, bestimmt. Bei der erfindungsgemäßen Verschleißnachstellvorrichtung 10 ist dies nicht der Fall. Ein üblicher Verlauf einer Nachstellkurve eines herkömmlichen Verschleißnachstellers wird durch eine Gerade (hier dick gezeichnet) vom Betätigungshub 0 bis zu einem Betätigungshub h₂ dargestellt. Dieser Bereich von h=0 bis h2 als erster Teil des Betätigungshubs h ist das konstruktive Lüftspiel kLS, welches bei weiterer Betätigung nach h₂ überwunden ist. Dann wird der übliche Nachsteller durch den Drehhebel 8 verstellt und weist den Verlauf der Nachstellkurve 100 auf, wobei der Verstellweg s ansteigt und das Lüftspiel LS verkleinert wird.

Bei der erfindungsgemäßen Verschleißnachstellvorrichtung 10, die auch als bidirektionaler Nachsteller bezeichnet werden kann, wird sowohl eine Lüftspielverkleinerung als auch eine Lüftspielvergrößerung vorgenommen. Hierzu wird die Verschleißnachstellvorrichtung 10 im Gegensatz zum herkömmlichen Verschleißnachsteller ohne konstruktives Lüftspiel kLS mit Beginn des Betätigungshubs h angetrieben, und zwar derart, dass eine Lüftspielvergrößerung mindestens teilweise bewirkt wird. Dabei wird der Verstellweg s ausgehend von einem Ruhewert, durch den in Fig. 2 die Abszisse verläuft, zu negativen Werten hin verstellt, hier bis auf einen Rückstellwert S₁, der bei einem Betätigungshub h₁ auftritt. Ein Verlauf dieses Rückstellwegs s ist durch eine Rückstellkurve 101 dargestellt. Die Rückstellkurve 101 kann unterschiedliche Formen, z.B. bedingt durch Bauteilgeometrie, aufweisen. Sie verläuft bis zu einem Umkehrpunkt 102, welcher durch den Betätigungshub h₁ und den Rückstellwert S₁ festgelegt ist. Diese Rückstellung verläuft in einem ersten Abschnitt des ersten Teils des Betätigungshubs h, und zwar in einem Rückstellbereich A von h=0 bis h₁.

In einem zweiten Abschnitt des Betätigungshubs h, der als erster Nachstellbereich mit B bezeichnet ist und von h₁ bis h₂ verläuft, wird die Verschleißnachstellvorrichtung 10 durch eine Richtungsumkehr angetrieben, wobei eine Nachstellung bewirkt wird, deren Verlauf durch eine Nachstellteilkurve 103 dargestellt ist. Die Nachstellteilkurve 103 kann unterschiedliche Formen, z.B. bedingt durch Bauteilgeometrie, aufweisen. Sie verläuft vom Umkehrpunkt 102 bis zum Betätigungshub h₂, in welchem das konstruktive Lüftspiel kLS des herkömmlichen Nachstellers erreicht ist.

In einem sich an den ersten Nachstellbereich B ab Betätigungshub h₂ anschließenden zweiten Nachstellbereich C folgt der Verlauf des Verstellwegs s dem Verlauf der Nachstellkurve 100 des herkömmlichen Nachstellers. Somit ist die Funktion der erfindungsgemäßen Verschleißnachstellvorrichtung 10 (bidirektionaler Nachsteller) ab dem Erreichen des konstruktiven Lüftspiels kLS identisch mit derjenigen des herkömmlichen Nachstellers.

Eine Lüftspieldefinition ist über das Steigungsverhältnis der Rückstellkurve 101 im Rückstellbereich A zum ersten Nachstellbereich B und Längenverhältnis des Rückstellbereichs A zum ersten Nachstellbereich B möglich. Da die Kurven eine beliebige Form haben können, ist mit Steigung die mittlere Steigung der Kurve 101 im Bereich A bzw. der Kurve 103 im Bereich B gemeint.

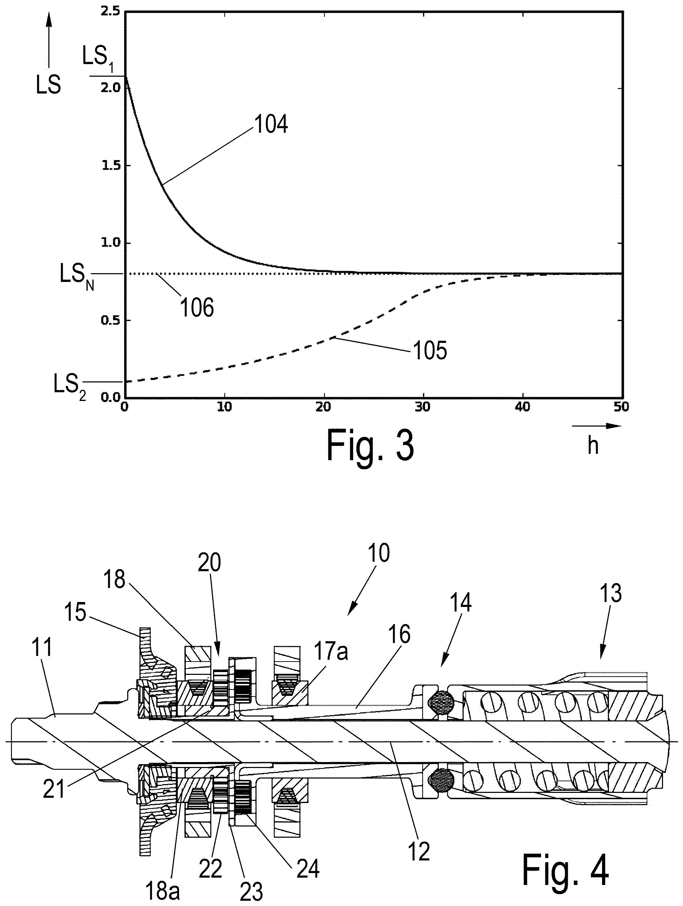

Fig. 3 zeigt eine schematische grafische Darstellung eines Eintaktverhaltens der erfindungsgemäßen Verschleißnachstellvorrichtung 10. Dabei ist ein Lüftspiel LS über einer Anzahl n von Betätigungshüben aufgetragen. Unter Eintaktverhalten ist ein Vorgang zu versehen, bei dem das aktuelle Lüftspiel LS ein nominelles Lüftspiel LS_{N} nach einer bestimmten Anzahl n von Betätigungshüben h einnimmt.

Bei einem zu großen Lüftspiel, z.B. Startlüftspiel LS₁ mit 2,1 mm, wird sich das Lüftspiel LS gemäß dem Verlauf einer Eintaktkurve 104 asymptotisch dem nominellen Lüftspiel LS_{N}, das auch durch die Gerade 106 dargestellt ist und hier beispielsweise den Wert 0,8 mm aufweist, nach ca. 25 Betätigungshüben h angenähert haben.

Die erfindungsgemäße Verschleißnachstellvorrichtung 10 bietet aber den Vorteil, dass ein zu kleines Lüftspiel LS, z.B. Startlüftspiel LS2 mit 0,1 mm, welches z.B. durch thermische Ausdehnung der Bremsbeläge 3 und/oder der Bremsscheibe 2 verursacht werden kann, auch kompensiert wird. Dabei erfolgt ebenfalls eine asymptotische Annäherung an das nominelle Lüftspiel LS_{N} nach ca. 40 Betätigungshüben gemäß dem Verlauf einer Eintaktkurve 105.

Die erfindungsgemäße Verschleißnachstellvorrichtung 10 ist somit in der Lage, das nominelle Lüftspiel LS_{N} der Scheibenbremse 10 wieder einzustellen, unabhängig davon, ob ein Startlüftspiel zuvor zu groß oder zu klein war. Diese Korrektur erfolgt kontinuierlich auf mechanischem Weg.

Die Verschleißnachstellvorrichtung 10 kann sich so dem nominellen Lüftspiel LS_{N} als Grenzwert von beiden Seiten annähern. Durch eine entsprechende Häufigkeit (Anzahl n) von Betätigungshüben wird auf diese Weise das nominellen Lüftspiel LS_{N} konstant gehalten.

Somit ist eine Auswertung des tatsächlichen Lüftspiels LS, das hier als jeweiliges Startlüftspiel dargestellt ist, und eine Entscheidung, ob das Lüftspiel LS verkleinert oder vergrößert werden soll, nicht erforderlich.

Das konstruktive Lüftspiel ist somit direkt über den Verlauf der Rückstellkurve 101 im Rückstellbereich A und die erste Nachstellteilkurve 102 (siehe Fig. 2) in dem ersten Nachstellbereich B als vorher festgelegtes Lüftspiel festlegbar, aber nicht über eine Spalte zwischen Bauteilen bestimmt. So ist das tatsächlich eingestellte Lüftspiel LS bezüglich Bauteil- und Positionstoleranzen weniger empfindlich.

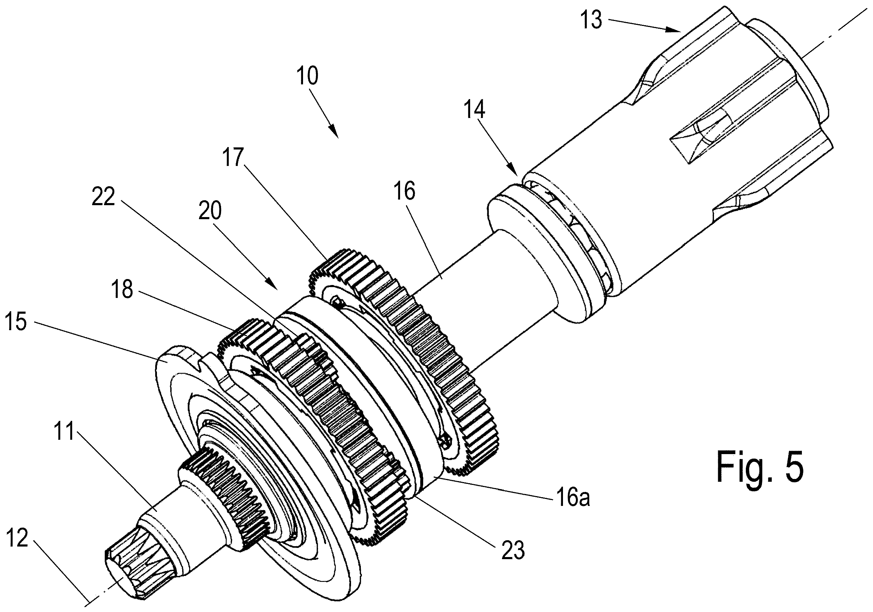

Ein erstes Ausführungsbeispiel der erfindungsgemäßen Verschleißnachstellvorrichtung 10 ist in Fig. 4 in einem Längsschnitt schematisch gezeigt. Und Fig. 5 zeigt eine schematische Perspektivansicht des ersten Ausführungsbeispiels nach Fig. 4.

Die Verschleißnachstellvorrichtung 10 umfasst eine Stellwelle 11 mit einer Nachstellerachse 12. Die Stellwelle 11 ist an ihrem unteren Ende, das in Fig. 4 rechts angeordnet ist, mit einem profilierten Übertragungsabschnitt 13 versehen, der zur Zusammenwirkung mit einer Hohlwelle der zugehörigen Spindeleinheit 5 vorgesehen ist und eine Drehbewegung der Stellwelle 11 zum Einstellen des Lüftspiels auf die Spindeleinheit 5 überträgt. Diese Funktion des Übertragungsabschnitts 13 und weitere sind z.B. der Beschreibung im Dokument DE 10 2004 037 771 A1 zu entnehmen.

Die Verschleißnachstellvorrichtung 10 ist in der Spindeleinheit 5 (siehe Figur 1) eingesetzt und am Bremssattel 4 über eine Lagerscheibe 15, die an dem oberen Ende der Stellwelle 11 angeordnet ist, gelagert. An dem zur Lagerscheibe 15 weisenden Ende des Übertragungsabschnitts 13 ist eine Kupplungseinrichtung 14 angeordnet, an welche sich zur Lagerscheibe 15 hin eine Antriebswelle 16 auf der Stellwelle 11 angeordnet anschließt. Und zwischen dem zur Lagerscheibe 15 weisenden Ende der Antriebswelle 16 und der Lagerscheibe 15 ist eine Getriebeeinheit 20 auf der Stellwelle 11 angeordnet.

Die Kupplungseinrichtung 14 dient zur Übertragung eines Drehmoments der Antriebswelle 16 auf den Übertragungsabschnitt 13. Gleichzeitig weist die Kupplungseinrichtung 14 einen Überlastschutz auf, wobei sie z.B. als Kugelrampenkupplung 14 ausgebildet sein kann und mit einer nicht näher bezeichneten Druckfeder in dem Übertragungsabschnitt 13 zusammenwirkt. Die Kupplungseinrichtung 14 überträgt ein Drehmoment in beiden Drehrichtungen.

Die Antriebswelle 16 weist an ihrem zur Lagerscheibe 15 weisenden Ende einen Hohlradflansch 16a auf. Diesem Hohlradflansch 16a benachbart (zum Übertragungsabschnitt 13 hin) ist auf der Antriebswelle 16 ein Nachstellantriebsrad 17 mit Stirnverzahnung über einen Nachstellfreilauf 17a in einer Drehrichtung drehfest angebracht. Der Nachstellfreilauf 17a dient dazu, dass der Hebel im Rückhub den Nachsteller nicht in die umgekehrte Richtung antreibt.

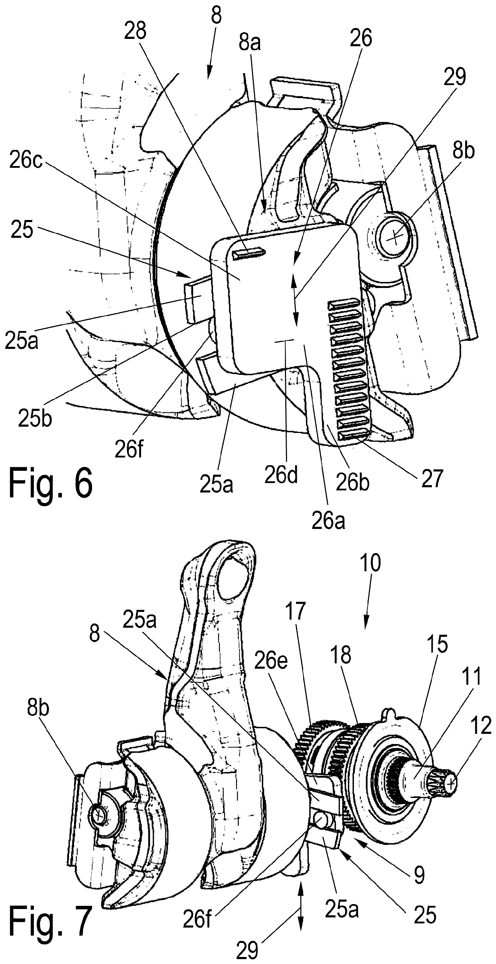

Eine Nachstelldrehbewegung wird vom Nachstellantriebsrad 17 über den in dieser Nachstelldrehrichtung sperrenden Nachstellfreilauf 17a auf die Antriebswelle 16, die Kupplungseinheit 14 und den Übertragungsabschnitt 13 übertragen. Der Antrieb des Nachstellantriebsrads 17 erfolgt durch den Drehhebel 8 und wird unten im Zusammenhang mit Fig. 5 und 6 ausführlich beschrieben.

Die Getriebeeinheit 20 umfasst hier weiterhin ein Sonnenrad 21 auf einem Hohlwellenabschnitt und einen Planetenradträger 23 mit ersten und zweiten Planetenrädern 22, 24. Auf dem Hohlwellenabschnitt ist ein Rückstellantriebsrad 17 über eine Rückstellfreilauf 17a nur in einer Drehrichtung drehfest aufgebracht. Das Sonnenrad 21 steht mit den ersten Planetenrädern 22 in Eingriff, und die zweiten Planetenräder 24 stehen mit einer Hohlradinnenverzahnung des Hohlradflansches 16a in Eingriff.

Eine Rückstelldrehbewegung wird vom Rückstellantriebsrad 18 über den in dieser Rückstelldrehrichtung, die an dieser Stelle noch der Nachstelldrehrichtung entspricht, sperrenden Rückstellfreilauf 18a zunächst auf die Getriebeeinheit 20 übertragen, welche die Drehrichtung umkehrt und dann über den Hohlradflansch 16a auf die Antriebswelle 16, die Kupplungseinheit 14 und den Übertragungsabschnitt 13 übertragen. Der Antrieb des Rückstellantriebsrads 18 erfolgt ebenfalls durch den Drehhebel 8 und wird unten im Zusammenhang mit Fig. 5 und 6 noch ausführlich beschrieben.

Der Rückstellfreilauf 18a verhindert dass der Hebel im Rückhub den Nachsteller in die umgekehrte Richtung antreibt.

Die Verschleißnachstellvorrichtung 10 kann wahlweise über das Nachstellantriebsrad 17 zur Lüftspielverkleinerung (erster und zweiter Nachstellbereich B, C in Fig. 2) oder über das Rückstellantriebsrad 18 zur Lüftspielvergrößerung (Rückstellbereich A in Fig. 2) angetrieben werden. Bei dem in Fig. 4 und 5 dargestellten ersten Ausführungsbeispiel ergibt sich eine Gerade als Rückstellkurve 101 in Fig. 2. Bei einem Antrieb des Rückstellantriebsrads 18 wird die Drehrichtung mit der Getriebeeinheit 20 als Planetengetriebe mit fixiertem Steg, d.h. Planetenradträger 24, umgekehrt. Wird das Nachstellantriebsrad 17 angetrieben, ist die Funktion identisch mit dem herkömmlichen Nachsteller. Ein Steigungsverhältnis der Rückstellkurve 101 im Rückstellbereich A zu den Nachstellkurven 102 und 103 in den Bereichen B und C in Fig. 2 wird über die Standübersetzung des Planetengetriebes der Getriebeeinheit 20 bestimmt.

In Fig. 6 ist eine schematische Perspektivansicht eines Antriebelementes 26 des ersten Ausführungsbeispiels nach Fig. 4 gezeigt, und Fig. 7 zeigt eine schematische Perspektivansicht des Antriebelementes 26 in einer anderen Blickrichtung mit der erfindungsgemäßen Verschleißnachstellvorrichtung 10 nach dem ersten Ausführungsbeispiel nach Fig. 4.

Der Drehhebel 8 ist in Fig. 6 mit einer seiner Stirnseiten 8a teilweise gezeigt. In Fig. 7 ist der Drehhebel 8 vollständig mit einem nicht näher bezeichneten Hebelarm deutlich zu erkennen. Der Hebelarm steht z.B. mit einem Druckluftzylinder zum Betätigen der Scheibenbremse 1 in Wirkverbindung. Bei einer solchen Betätigung wird die Scheibenbremse 1 zugespannt und bei nachfolgendem Lösen wird der Drehhebel 8 wieder in seine Ausgangslage wie in Fig. 6 und 7 zu sehen ist, zurückgeschwenkt. Dabei ist der Drehhebel 8 um eine Drehhebelachse 8b verschwenkbar. Die Drehhebelachse 8b verläuft hier rechtwinklig zu einer nicht gezeigten Bremsscheibendrehachse und auch rechtwinklig zu der Nachstellerachse 12.

An der Stirnseite 8a des Drehhebels 8 ist ein gabelförmiges Abtriebelement 25 angebracht. Es weist zwei parallel zueinander angeordnete Gabelelemente 25a auf, die in einem Abstand voneinander stehen, wobei sie eine Führung 25b zwischen ihren gegenüberstehenden Innenseiten bilden.

Das Abtriebelement 25 steht mit dem Antriebelement 26 in Wirkverbindung. Das Antriebelement 26 ist in diesem ersten Ausführungsbeispiel plattenförmig ausgebildet und in einer Bewegungsrichtung 29 linear verschiebbar geführt angeordnet. Eine Linearlagerung ist nicht dargestellt, aber leicht vorstellbar. Sie kann z.B. eine Kulissenführung sein, die im Bremssattel 4 angeordnet und befestigt ist.

Das plattenförmige Antriebelement 26 weist einen Körper 26a mit einer Antriebsseite 26d und einer gegenüberliegenden Zapfenseite 26e auf, die parallel zueinander sind. Die Antriebsseite 26d weist zur Verschleißnachstellvorrichtung 10 und die Zapfenseite 26e zur Stirnseite 8a des Drehhebels 8.

Der Körper 26a des Antriebelementes 26 weist einen ersten Antriebsabschnitt 26b und einen daneben liegenden zweiten Antriebsabschnitt 26c auf. Der erste Antriebsabschnitt 26b ist hier in der Fig. 6 nach unten hin von der Drehhebelachse 8b weg weisend um etwa ein Drittel länger als der zweite Antriebsabschnitt 26c. Auf dem ersten Antriebsabschnitt 26b ist eine Nachstellantriebsverzahnung 27, hier in Gestalt einer Zahnstange mit Stirnradverzahnung, angeordnet, welche parallel zur Richtung der Drehhebelachse 8b von der Antriebsseite 26d hervorsteht. Die Nachstellantriebsverzahnung 27 ist von einer Unterkante des ersten Antriebsabschnitts 26b in einer Länge nach oben verlaufend angeordnet, wobei ihre Länge etwa zwei Drittel der Länge des ersten Antriebsabschnitts 26b ausmacht.

Auf dem zweiten Antriebsabschnitt 26c ist eine Rückstellantriebsverzahnung 28, hier auch in Gestalt einer Zahnstange mit Stirnradverzahnung, angeordnet, welche parallel zur ersten Antriebsverzahnung 27 verläuft und parallel zur Richtung der Drehhebelachse 8b von der Antriebsseite 26d hervorsteht. Die Rückstellantriebsverzahnung 28 ist von einer Oberkante des zweiten Antriebsabschnitts 26c in einer Länge nach unten verlaufend angeordnet, wobei ihre Länge nur einen Zahn ausmacht. Die Nachstellantriebsverzahnung 27 und die Rückstellantriebsverzahnung 28 sind an den Längsrändern des Antriebelementes 26 angeordnet und in einem Abstand zueinander angeordnet, welcher dem axialen Mittenabstand des Nachstellantriebsrads 17 und des Rückstellantriebsrads 18 der Verschleißnachstellvorrichtung 10 entspricht.

Auf der Zapfenseite 26e des Antriebelementes 26 ist im mittleren Bereich am linken Rand (Fig. 6) ein von der Zapfenseite 26e parallel zur Drehhebelachse 8b zur Stirnseite 8a des Drehhebels 8 hervorstehender Zapfen 26f in Kreiszylindergestalt angeordnet und mit dem Antriebelement 26 verbunden bzw. mit diesem einstückig ausgeführt. Auch die Verzahnungen 27 und 28 können als separate Anbauteile oder einstückig mit dem Antriebelement 26 ausgeführt sein. Der Zapfen 26f ist in der Führung 25b der Gabelelemente 25a des Abtriebelementes 25 in der Führung 25b in Längsrichtung der Führung 25b verschiebbar geführt.

In Fig. 7 ist die Anordnung der Verschleißnachstellvorrichtung 10 in Relation zum Drehhebel 8 dargestellt. Dabei steht die Nachstellantriebsverzahnung 27 mit dem Nachstellantriebsrad 17 in der gezeigten Ausgangsstellung noch nicht in Eingriff, was in dem in Fig. 6 zu erkennenden Abstand der beiden Antriebsverzahnungen 27 und 28 in Bewegungsrichtung 29 voneinander begründet ist. Die Rückstellantriebsverzahnung 28 steht mit dem Rückstellantriebsrad 28 in dieser Ausgangsstellung in Eingriff. Unter der Ausgangsstellung ist ein Betätigungshub h von h=0 zu verstehen (siehe Fig. 2)

In der folgenden Beschreibung wird zusätzlich Bezug auf Fig. 2 genommen. Bei einer Verschwenkbewegung des Drehhebels 8 um die Drehhebelachse 8b in Fig. 6 im Uhrzeigersinn verschwenkt das Gabelelement 25 ebenfalls, da es mit dem Drehhebel 8 verbunden ist. Aufgrund der Wirkverbindung zwischen Gabelelement 25 und dem Zapfen 26f des Antriebelementes 26 und die nicht gezeigte Linearführung des Antriebelementes 26 in der Bewegungsrichtung 29 wird die Schwenkbewegung des Drehhebels 8 in eine Linearbewegung des Antriebelementes 26 in Bewegungsrichtung 29 in Fig. 6 und 7 nach oben umgewandelt. Da die Rückstellantriebsverzahnung 28 schon bei Beginn der Verschwenkung des Drehhebels (h=0) mit dem Rückstellantriebsrad 18 in Eingriff steht, wird dieses nun (in Fig. 7) im Uhrzeigersinn um die Nachstellachse verdreht. Dabei ergibt sich eine Vergrößerung des Lüftspiels (Rückstellkurve 101 in Fig. 2). Sobald der Betätigungshub h₁ erreicht wird, kommt die Rückstellantriebsverzahnung 28 und das Rückstellantriebsrad 18 außer Eingriff und die Nachstellantriebsverzahnung 27 kommt in Eingriff mit dem Nachstellantriebsrad 17. Es ist hier auch denkbar, dass die Nachstellantriebsverzahnung 27 nicht unmittelbar nach dem außer Eingriff Kommen der Rückstellantriebsverzahnung 28 in Eingriff kommt. Für die Kurve in Fig. 2 würde dies bedeuten, dass der Umkehrpunkt durch ein horizontales Plateau dargestellt wird. Die Länge des Plateaus ist von der Länge der Lücke zwischen Rückstellantriebsverzahnung 28 und Nachstellantriebsverzahnung 27. Nun wird bei weiterer Verschwenkung des Drehhebels 4 beim Zuspannen der Scheibenbremse 1 (Betätigungshub h verläuft von h₁ über h₂ und weiter) das Nachstellantriebsrad 17 weiter verdreht und verkleinert das Lüftspiel. Dieser Vorgang verläuft gemäß Nachstellteilkurve 102 und Nachstellkurve 103 (Fig. 2).

Die Form und die Länge der Verzahnungen 27 und 28 bestimmen die Position und Länge des Rückstellbereiches A und der Nachstellbereiche B und C.

Beim Lösen der Scheibenbremse 1 verschwenkt der Drehhebel 8 wieder zurück in die Ausgangsstellung auf h=0. Dabei wird das Antriebelement 26 in der Bewegungsrichtung 29 über das Abtriebelement 25 nach unten verschoben, wobei sowohl das Nachstellantriebsrad 17 und das Rückstellantriebsrad 18 durch die jeweiligen Verzahnungen 27 und 28 im Gegensinn verdreht werden. Dabei wirken die jeweiligen Freiläufe 17a und 18a derart, dass keine Übertragung von Drehmomenten auf die Verschleißnachstellvorrichtung 10 erfolgt.

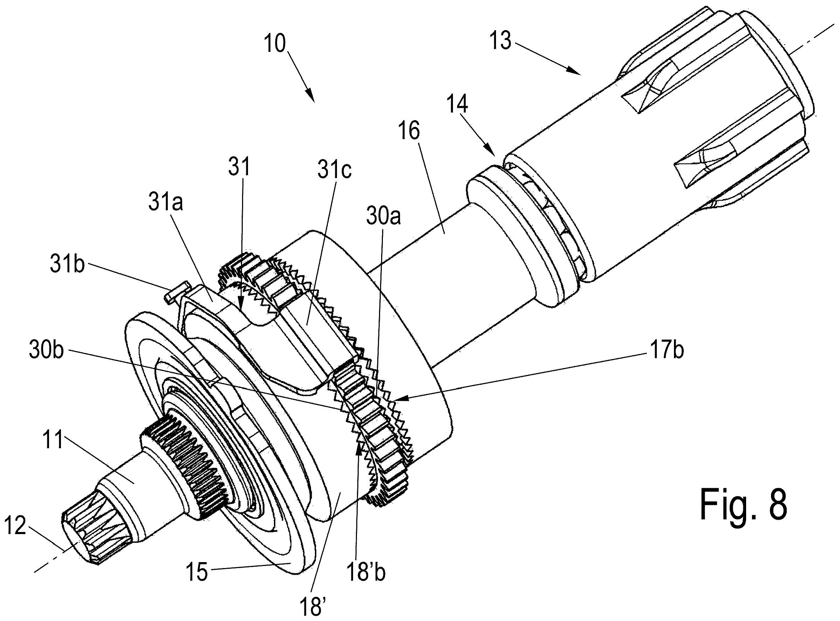

In Fig. 8 ist eine schematische Perspektivansicht eines zweiten Ausführungsbeispiels der erfindungsgemäßen Verschleißnachstellvorrichtung 10 dargestellt.

Bei dem zweiten Ausführungsbeispiel ist auch die Getriebeeinheit 20 vorhanden, auf welcher ein Antriebsrad 30 mit Stirnverzahnung angeordnet ist. Das Antriebsrad 30 ist axial zu der Stellwelle 11 verschiebbar und in Relation zu der Stellwelle 11 verdrehbar angeordnet. Außerdem weist das Antriebsrad 30 auf jeder Seite am Umfangsrand eine Hirthverzahnung auf, welche mit jeweils mit einer damit korrespondierenden Hirthverzahnung des Nachstellantriebsrads 17' und des Rückstellantriebsrads 18' in Eingriff bringbar ist. So ist eine Hirthverzahnung auf der Seite des Antriebsrads 30 als Nachstellverzahnung 30a angeordnet, welche zum Profilabschnitt 13 weist. Auf der anderen Seite des Antriebsrads 30, die zur Lagerscheibe 15 weist, ist eine Hirthverzahnung als Rückstellverzahnung 30b angeordnet.

Das Nachstellantriebsrad 17' ist hier auch mit einer Verzahnung 17'b ausgebildet, die mit der Nachstellverzahnung 30a korrespondiert und zur Lagerscheibe 15 weist. Außerdem ist das Nachstellantriebsrad 17 mit der Antriebswelle 16 drehfest als eine Art Flansch verbunden. Das Rückstellantriebsrad 18' ist mit einer Verzahnung 18'b ausgebildet, die mit der Rückstellverzahnung 30b korrespondiert und zum Profilabschnitt 13 weist. Weiterhin sind die Verzahnungen 17'b und 18'b zueinander gewandt und axial beabstandet. Das Rückstellantriebsrad 18' ist auch über die Getriebeeinheit 20 zur Drehrichtungsumkehr wie im ersten Ausführungsbeispiel mit der Antriebswelle 16 gekoppelt.

Der axiale Abstand der Verzahnungen 17'b und 18'b ist so groß gewählt, dass das Antriebsrad 30 so axial verstellbar ist, dass die Nachstellverzahnung 30a mit der Verzahnung 17'b des Nachstellantriebsrads 17' in Eingriff bringbar ist, wenn das Antriebsrad 30 nach rechts in Axialrichtung auf den Profilabschnitt 13 verstellt ist und vorher die Rückstellverzahnung 30b außer Eingriff mit der Verzahnung 18'b des Rückstellantriebsrads 17' kommt und umgekehrt. Der Abstand ist außerdem so groß gewählt, dass in keinem Fall das Antriebsrad 30 sowohl mit dem Nachstellantriebsrad 17 als auch mit dem Rückstellantriebsrad 18 gleichzeitig in Eingriff steht.

Auch hier ist jeweils im Nachstellantriebsrad 17' und im Rückstellantriebsrad 18' ein Freilauf vorgesehen sein.

Das Antriebsrad 30 ist mittels eines Schaltelementes 31 verschiebbar. Wobei in einem Schaltzustand, der in Fig. 8 gezeigt ist, die Rückstellverzahnung 30b des Antriebsrads 30 in Eingriff mit der Verzahnung 18'b des Rückstellantriebsrads 18' steht und außer Eingriff mit der Verzahnung 17'b des Nachstellantriebsrads 17' ist. In dem anderen Schaltzustand steht die Nachstellverzahnung 30a des Antriebsrads 30 in Eingriff mit der Verzahnung 17'b des Nachstellantriebsrads 17' ist und außer Eingriff mit der Verzahnung 18'b des Rückstellantriebsrads 18'.

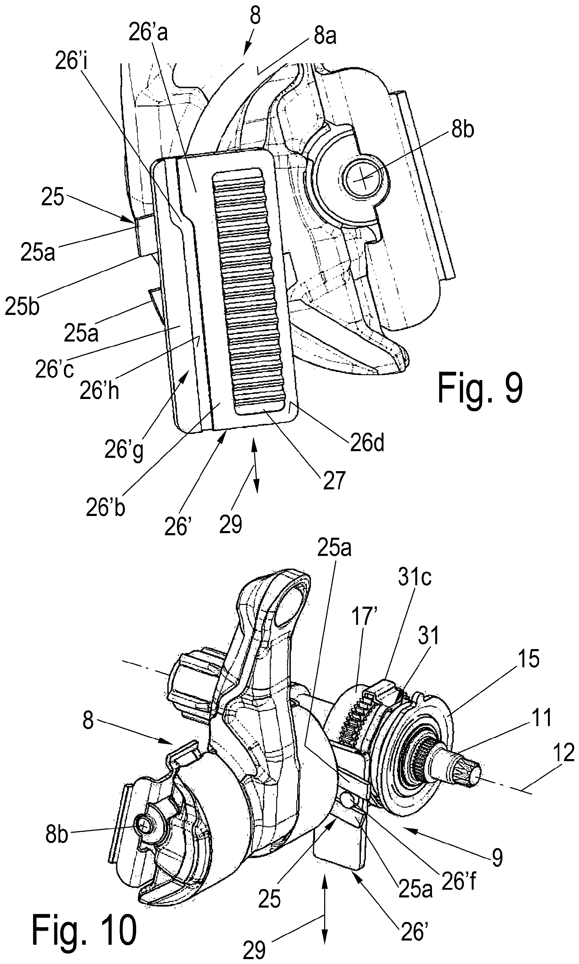

Das Schaltelement 31 ist hier auf dem Rückstellantriebsrad 18' auf einem Bund axial verschiebbar angeordnet und weist einen Schaltelementkörper 31a auf, der an seinem Umfang parallel zur Drehhebelachse 8b einen in Richtung zum Drehhebel 8 radial hervorstehenden Schaltantriebsabschnitt 31b aufweist. Hier um 90° verdreht ist der Schaltelementkörper 31a mit einem Schaltstellabschnitt 31c verbunden, der sich in Axialrichtung der Nachstellachse 11 über die Stirnverzahnung des Antriebsrads 30 erstreckt und diese hakenförmig umgibt, wobei bei Drehen des Antriebsrads 30 ein Gleiten der Stirnverzahnung unter dem Schaltstellabschnitt 31c möglich ist. Der Schaltstellantriebsabschnitt 31b steht mit dem Antriebelement 26' in Wirkverbindung und wird von diesem bei Betätigung des Drehhebels 8 von der einen Schaltstellung in die andere gestellt, was unten noch erläutert wird. Außerdem steht das Antriebsrad 30 auch mit dem Antriebelemente 26' über eine Verzahnung in Wirkverbindung. Dazu zeigt Fig. 9 eine schematische Perspektivansicht des Antriebelementes 26' des zweiten Ausführungsbeispiels nach Fig. 8, und Fig. 10 stellt eine schematische Perspektivansicht des Antriebelementes 26' in einer anderen Blickrichtung mit der erfindungsgemäßen Verschleißnachstellvorrichtung 10 nach dem zweiten Ausführungsbeispiel nach Fig. 8 dar. Die Anordnungen der Figuren 9 und 10 sind wie diejenigen der Figuren 6 und 7. Es werden daher hier nur die Unterschiede erläutert.

Im Unterschied zu dem ersten Ausführungsbeispiel ist das Antriebelement 26' schmaler. Der Körper 26'a weist die Antriebsseite 26'd und die Zapfenseite 26'e mit dem Zapfen 26'f auf. Der Zapfen 26'f steht wie im ersten Ausführungsbeispiel mit dem Abtriebelement 25 in Wirkverbindung.

Der ersten Antriebsabschnitt 26'b ist mit der Nachstellantriebsverzahnung 27versehen, welche jedoch im Unterschied zum ersten Ausführungsbeispiel sich über fast die gesamte Länge des Körpers 26'a erstreckt und länger als die Nachstellantriebsverzahnung 27 des ersten Ausführungsbeispiels ist. Dies ist deshalb erforderlich, das die Nachstellantriebsverzahnung 27 hier ständig im Eingriff mit dem (nur einen) Antriebsrad 30 der Verschleißnachstellvorrichtung 10 steht.

Der zweite Antriebsabschnitt 26'c ist als eine Führungsnut 26'g mit einer Führungsfläche 26'h und einer Führungsstufe 26'i ausgebildet, die ineinander übergehen. Dabei ist die Führungsfläche 26'h in Bezug auf die Führungsstufe 26'i bezogen auf die Nachstellerachse 12 in deren Richtung nach rechts, d.h. zum Profilabschnitt 13 der Verschleißnachstellvorrichtung 10 hin versetzt. Die Führungsnut 26'g, die Führungsfläche 26'h und die Führungsstufe 26'i stehen mit dem Schaltstellabschnitt 31b des Schaltelementes 31 in Wirkverbindung. Dazu kann eine Feder, z.B. in dem Schaltelement 31 relativ zur Antriebswelle 16, vorgesehen sein, welche das Anliegen des Schaltstellabschnitts 31b an der Führungsfläche 26'h und der Führungsstufe 26'i bewirkt. Natürlich kann auch eine Kulissenführung dazu vorgesehen sein.

Bei Verschwenkung des Drehhebels 8 beim Zuspannen der Scheibenbremse 1 wird das Antriebsrad 30 sofort durch die Nachstellverzahnung 27 gedreht, da das Antriebelement 26' in Bewegungsrichtung 29 linear nach oben verstellt wird. Das Schaltelement 31 steht in dem einen Schaltzustand, der in Fig. 8 gezeigt ist, wobei das Antriebsrad 30 mit seiner Rückstellverzahnung 30b in Eingriff mit der Verzahnung 18'b des Rückstellrads 18' steht. Dabei liegt der Schaltantriebsabschnitt 31b in der Führungsnut 26'g im oberen Bereich seitlich an der Führungsstufe 26'i des Antriebelementes 26' an. Bei weiterer Verschwenkung des Drehhebels 8 und Erreichend des Betätigungshubs h₁ gleitet die Führungsstufe 26'i von dem anliegenden Schaltantriebsabschnitt 31b ab und die nach rechts, d.h. in Richtung der Nachstellerachse 12, versetzte Führungsfläche 26'h kommt zum Anliegen an dem Schaltantriebsabschnitt 31b. Dabei wird das Schaltelement 31 aus dem einen Schaltzustand in den anderen Schaltzustand verstellt, wobei die Rückstellverzahnung 30b zunächst außer Eingriff mit der Verzahnung 18'b des Rückstellrads 18' kommt und die Nachstellverzahnung 30a mit der Verzahnung 17'b des Nachstellrads 17 in Eingriff kommt.

So ist die Rückstellbewegung in dem einen Schaltzustand des Schaltelementes 31 der Rückstellkurve 101 und die Nachstellbewegung in dem anderen Schaltzustand des Schaltelementes 31 den Nachstellkurven 102 und 103 in Fig. 2 zugeordnet.

Über die Form der Führungsnut 26'g wird die Position und Länge der Teilbereiche A und B in Fig. 2 bestimmt.

Die Erfindung ist nicht auf die oben beschriebenen Ausführungsbeispiele beschränkt. Sie ist im Rahmen der beigefügten Ansprüche modifizierbar.

So ist es denkbar, dass das Abtriebelement 25 mit den Gabelelementes 25a ein herkömmlicher Betätiger 9a ist.

### Bezugszeichenliste

- 1: Scheibenbremse
- 2: Bremsscheibe
- 3: Bremsbelag
- 4: Bremssattel
- 5, 5': Spindeleinheit
- 6, 6': Druckstempel
- 6a, 6'a: Druckstück
- 7: Traverse
- 8: Drehhebel
- 8a: Stirnseite
- 8b: Drehhebelachse
- 9: Antrieb
- 9a: Betätiger
- 9b: Mitnehmer
- 10: Verschleißnachstellvorrichtung
- 11: Stellwelle
- 12: Nachstellerachse
- 13: Übertragungsabschnitt
- 14: Kupplungseinrichtung
- 15: Lagerscheibe
- 16: Antriebswelle
- 16a: Hohlradflansch
- 17: Nachstellantriebsrad
- 17a: Nachstellfreilauf
- 17'b: Verzahnung
- 18: Rückstellantriebsrad
- 18a: Rückstellfreilauf
- 18'b: Verzahnung
- 19, 19': Synchronrad
- 19a: Synchronmittel
- 20: Getriebeeinheit
- 21: Sonnenrad
- 22: Erste Planetenräder
- 23: Planetenradträger
- 24: Zweite Planetenräder
- 25: Abtriebelement
- 25a: Gabelelement
- 25b: Führung
- 26, 26': Antriebelement
- 26a, 26'a: Körper
- 26b, 26'b: Erster Antriebsabschnitt
- 26c: Zweiter Antriebsabschnitt
- 26d, 26'd: Antriebsseite
- 26e, 26'e: Zapfenseite
- 26f, 26'f: Zapfen
- 26'g: Führungsnut
- 26'h: Führungsfläche
- 26'i: Führungsstufe
- 27: Nachstellantriebsverzahnung
- 28: Rückstellantriebsverzahnung
- 29: Bewegungsrichtung
- 30: Antriebsrad
- 30a: Nachstellverzahnung
- 30b: Rückstellverzahnung
- 31: Schaltelement
- 31a: Schaltelementkörper
- 31b: Schaltantriebsabschnitt
- 31c: Schaltstellabschnitt
- 100: Nachstellkurve
- 101: Rückstellkurve
- 102: Umkehrpunkt
- 103: Nachstellteilkurve
- 104, 105: Eintaktkurve
- 106: Nominelles Lüftspiel
- A: Rückstellbereich
- B: Erster Nachstellbereich
- C: Zweiter Nachstellbereich
- h, h₁, h₂: Betätigungshub
- kLS: konstruktives Lüftspiel
- LS: Lüftspiel
- n: Anzahl
- s: Verstellweg
- S₁: Rückstellwert

## Patentansprüche

1. Verschleißnachstellvorrichtung (10) zum Einstellen eines vorher festgelegten Lüftspiels für eine Scheibenbremse (1), insbesondere für ein Kraftfahrzeug, mit einer Zuspannvorrichtung, vorzugsweise mit einem Drehhebel (8), wobei die Verschleißnachstellvorrichtung (10) mit der Zuspannvorrichtung, vorzugsweise mit dem Drehhebel (8), koppelbar und vorzugsweise in eine Spindeleinheit (5, 5') der Scheibenbremse (1) einsetzbar ist,
wobei die Verschleißnachstellvorrichtung (10) zum Einstellen des vorher festgelegten Lüftspiels für eine Verkleinerung eines aktuellen Lüftspiels, das in Bezug auf das vorher festgelegte Lüftspiels einen vorher festlegbaren Grenzwert überschritten hat, in einer Nachstelldrehrichtung und zur Vergrößerung eines aktuellen Lüftspiels, das in Bezug auf das vorher festgelegte Lüftspiels einen vorher festlegbaren Grenzwert unterschritten hat, in einer zu der Nachstelldrehrichtung entgegengesetzten Rückstelldrehrichtung bidirektional verdrehbar ausgebildet ist, **dadurch gekennzeichnet,**
**dass** die Verschleißnachstellvorrichtung (10) für eine Umschaltung einer Drehrichtungsumkehr von der Nachstelldrehrichtung in die zu der Nachstelldrehrichtung entgegengesetzten Rückstelldrehrichtung während eines Betätigungsvorgangs ausgebildet ist.

2. Verschleißnachstellvorrichtung (10) nach Anspruch 1, **dadurch gekennzeichnet, dass** ein festes Verhältnis zwischen der Verkleinerung des aktuellen Lüftspiels und der Vergrößerung des aktuellen Lüftspiels vorher festlegbar ist.

3. Verschleißnachstellvorrichtung (10) nach Anspruch 1 oder 2, **dadurch gekennzeichnet, dass** die Verschleißnachstellvorrichtung (10) mindestens ein Nachstellantriebsrad (17, 17'), welches für die Verdrehung der Verschleißnachstellvorrichtung (10) in der Nachstelldrehrichtung vorgesehen ist, mindestens ein Rückstellantriebsrad (18, 18'), das für die Verdrehung der Verschleißnachstellvorrichtung (10) in der Rückstelldrehrichtung vorgesehen ist, und ein Antriebelement (26, 26'), welches gleichzeitig mit der Zuspannvorrichtung, vorzugsweise mit dem Drehhebel (8), koppelbar und mit dem mindestens einen Nachstellantriebsrad (17, 17') und dem mindestens einen Rückstellantriebsrad (18, 18') in Wirkverbindung steht, aufweist.

4. Verschleißnachstellvorrichtung (10) nach Anspruch 3, **dadurch gekennzeichnet, dass** das mindestens eine Nachstellantriebsrad (17, 17') und das mindestens eine Rückstellantriebsrad (18, 18') mit einer Antriebswelle (16) der Verschleißnachstellvorrichtung (10) gekoppelt sind.

5. Verschleißnachstellvorrichtung (10) nach Anspruch 4, **dadurch gekennzeichnet, dass** das mindestens eine Nachstellantriebsrad (17, 17') direkt mit der Antriebswelle (16) über einen Nachstellfreilauf (17a) und das mindestens eine Rückstellantriebsrad (18, 18') über einen Rückstellfreilauf (18a) und über eine Getriebeeinheit (20) mit der Antriebswelle (16) gekoppelt sind, wobei die Getriebeeinheit (20) für eine Drehrichtungsumkehr ausgebildet ist.

6. Verschleißnachstellvorrichtung (10) nach Anspruch 5, **dadurch gekennzeichnet, dass** die Getriebeeinheit (20) ein Planetengetriebe ist.

7. Verschleißnachstellvorrichtung (10) nach Anspruch 5 oder 6, **dadurch gekennzeichnet, dass** das Antriebelement (26, 26') zur Umwandlung einer Schwenkbewegung in eine lineare Hubbewegung ausgebildet ist.

8. Verschleißnachstellvorrichtung (10) nach Anspruch 6, **dadurch gekennzeichnet, dass** das Antriebelement (26) mindestens eine Nachstellverzahnung (27) als Wirkverbindung mit dem mindestens einen Nachstellantriebsrad (17) und eine Rückstellverzahnung (28) als Wirkverbindung mit dem mindestens einen Rückstellantriebsrad (18) aufweist.

9. Verschleißnachstellvorrichtung (10) nach Anspruch 7, **dadurch gekennzeichnet, dass** das Antriebelement (26) mindestens eine Nachstellverzahnung (27) aufweist und dass die Verschleißnachstellvorrichtung (10) mindestens ein aus einem Zustand in einen anderen Zustand schaltbares Antriebsrad (30) aufweist, welches in dem einen Zustand in Wirkverbindung mit dem mindestens einen Rückstellantriebsrad (18') und in dem anderen Zustand in Wirkverbindung mit dem mindestens einen Nachstellantriebsrad (17') steht, wobei das mindestens eine schaltbare Antriebsrad (30) ständig in Wirkverbindung mit der mindestens einen Nachstellverzahnung (27) des Antriebelementes (26) steht.

10. Verschleißnachstellvorrichtung (10) nach Anspruch 9, **dadurch gekennzeichnet, dass** das mindestens eine schaltbare Antriebsrad (30) mit einem Schaltelement (31) gekoppelt ist, welches mit dem Antriebelement (26') in Wirkverbindung steht.

11. Verschleißnachstellvorrichtung (10) nach Anspruch 10, **dadurch gekennzeichnet, dass** das Antriebelement (26') eine Nachstellverzahnung (27) als Wirkverbindung mit dem mindestens einen Antriebsrad (30) und eine Führungsnut (26'g) in Wirkverbindung mit dem Schaltelement (31) aufweist.

12. Scheibenbremse (1), vorzugsweise druckluftbetätigt, insbesondere für ein Kraftfahrzeug, mit einer Zuspannvorrichtung, vorzugsweise mit einem Bremsdrehhebel (8), mindestens einer Spindeleinheit (5, 5'), und mindestens einer Verschleißnachstellvorrichtung (10), welche mit der Zuspannvorrichtung, vorzugsweise mit dem Bremsdrehhebel (9), gekoppelt und in die mindestens eine Spindeleinheit (5, 5') der Scheibenbremse (1) eingesetzt ist,
**dadurch gekennzeichnet, dass**
die mindestens eine Verschleißnachstellvorrichtung (10) eine bidirektionale Verschleißnachstellvorrichtung (10) nach einem der vorhergehenden Ansprüche ist.

## Claims

1. A wear adjustment device (10) for setting a predetermined release clearance for a disc brake (1), in particular for a motor vehicle, having an application device, preferably having a pivoted lever (8), it being possible to couple the wear adjustment device (10) to the application device, preferably to the pivoted lever (8), and preferably to insert it into a spindle unit (5, 5') of the disc brake (1),
in order to set the predetermined release clearance it being possible to rotate the wear adjustment device (10) bidirectionally both in an adjustment direction to reduce a current release clearance that has exceeded a limit value that can be predetermined in relation to the predetermined release clearance and in a return direction opposite to the adjustment direction to increase a current release clearance that has fallen below a limit value that can be predetermined in relation to the predetermined release clearance, **characterised in that**
the wear adjustment device (10) is designed to switch a direction of rotation from the adjustment direction of rotation to the return direction of rotation opposite the adjustment direction of rotation during actuation.

2. A wear adjustment device (10) according to claim 1, **characterised in that** it is possible to predetermine a fixed ratio between the reduction in the current release clearance and the increase in the current release clearance.

3. A wear adjustment device (10) according to claim 1 or 2, **characterised in that** the wear adjustment device (10) has at least one adjustment drive wheel (17, 17') that is provided to rotate the wear adjustment device (10) in the adjustment rotation direction, at least one return drive wheel (18, 18') that is provided to rotate the wear adjustment device (10) in the return rotation direction, and a drive element (26, 26') that can be coupled to the application device, preferably to the pivoted lever (8), at the same time as being operatively connected to the at least one adjustment drive wheel (17, 17') and the at least one return drive wheel (18, 18').

4. A wear adjustment device (10) according to claim 3, **characterised in that** the at least one adjustment drive wheel (17, 17') and the at least one return drive wheel (18, 18') are coupled to a drive shaft (16) of the wear adjustment device (10).

5. A wear adjustment device (10) according to claim 4, **characterised in that** the at least one adjustment drive wheel (17, 17') is coupled directly to the drive shaft (16) via an adjustment freewheel (17a) and the at least one return drive wheel (18, 18') is coupled to the drive shaft (16) via a return freewheel (18a) and a gear unit (20), the gear unit (20) being designed to reverse the direction of rotation.

6. A wear adjustment device (10) according to claim 5, **characterised in that** the gear unit (20) is a planetary gear.

7. A wear adjustment device (10) according to claim 5 or 6, **characterised in that** the drive element (26, 26') is designed to convert a pivoting motion into a linear stroke motion.

8. A wear adjustment device (10) according to claim 6, **characterised in that** the drive element (26) has at least one set of adjustment teeth (27) forming an operative connection to the at least one adjustment drive wheel (17) and a return tooth (28) forming an operative connection to the at least one return drive wheel (18).

9. A wear adjustment device (10) according to claim 7, **characterised in that** the drive element (26) has at least one set of adjustment teeth (27) and that the wear adjustment device (10) has at least one drive wheel (30) that can be switched from one state to another state and that, in one state, is operatively connected to the at least one return drive wheel (18') and, in the other state, is operatively connected to the at least one adjustment drive wheel (17'), the at least one switchable drive wheel (30) being continuously operatively connected to the at least one set of adjustment teeth (27) of the drive element (26).

10. A wear adjustment device (10) according to claim 9, **characterised in that** the at least one switchable drive wheel (30) is coupled to a switching element (31) that is operatively connected to the drive element (26').

11. A wear adjustment device (10) according to claim 10, **characterised in that** the drive element (26') has a set of adjustment teeth (27) forming an operative connection to the at least one drive wheel (30) and a guide groove (26'g) that is operatively connected to the switching element (31).

12. A disc brake (1), preferably compressed air-actuated, in particular for a motor vehicle, having an application device, preferably a pivoted brake lever (8), at least one spindle unit (5, 5') and at least one wear adjustment device (10) that is coupled to the application device, preferably to the pivoted brake lever (8), and into which is inserted at least one spindle unit (5, 5') of the disc brake (1),
**characterised in that**
the at least one wear adjustment device (10) is a bidirectional wear adjustment device (10) according to any one of the preceding claims.

## Revendications

1. Dispositif (10) de rattrapage d'usure pour régler un jeu de garnitures fixé auparavant d'un frein (1) à disque, notamment pour un véhicule automobile, comprenant un dispositif de serrage, ayant de préférence une levier (8) tournant, dans lequel le dispositif (10) de rattrapage d'usure peut être couplé au dispositif de serrage, de préférence au levier (8) tournant, et peut être inséré de préférence dans une unité (5, 5') de broche du frein (1) à disque,
dans lequel le dispositif (10) de rattrapage d'usure est, pour régler le jeu de garnitures fixé auparavant, constitué tourant bidirectionnellement pour une diminution du jeu de garnitures présent, qui, rapporté au jeu de garnitures fixé auparavant, a dépassé une valeur limite pouvant être fixée auparavant dans un sens de rotation de rattrapage et, pour l'augmentation du jeu de garnitures présent, qui, rapporté au jeu de garnitures fixé auparavant, est devenu inférieur à une valeur limite pouvant être fixée auparavant, dans un sens de rappel contraire au sens de rattrapage, **caractérisé en ce que** le dispositif (10) de rattrapage d'usure est constitué pour une commutation d'une inversion du sens de rotation du sens de rotation en rattrapage au sens de rotation de rappel en sens contraire au sens de rotation de rattrapage, pendant une opération d'actionnement.

2. Dispositif (10) de rattrapage d'usure suivant la revendication 1, **caractérisé en ce qu'**un rapport fixe entre la diminution du jeu de garnitures présent et l'augmentation du jeu de garnitures présent peut être fixé à l'avance.

3. Dispositif (10) suivant la revendication 1 ou 2, **caractérisé en ce que** le dispositif (10) de rattrapage d'usure a au moins une roue (17, 17') d'entraînement de rattrapage prévue pour faire tourner le dispositif (10) de rattrapage d'usure dans le sens de rotation de rattrapage, au moins une roue d'entraînement (18, 18') de rappel, prévue pour faire tourner le dispositif (10) de rattrapage d'usure dans le sens de rotation de rappel et un élément (26, 26') d'entraînement, qui est en liaison d'action, en même temps, en pouvant être couplée au dispositif de serrage, de préférence au levier (8) tournant, avec la au moins une roue (17, 17') d'entraînement de rattrapage et la au moins une roue (18, 18') d'entraînement de rappel.

4. Dispositif (10) suivant la revendication 3, **caractérisé en ce que** la au moins une roue (17, 17') d'entraînement de rattrapage et la au moins une roue (18, 18') d'entraînement de rappel sont couplées à un arbre (16) d'entraînement du dispositif (10) de rattrapage d'usure.

5. Dispositif (10) suivant la revendication 4, **caractérisé en ce que** la au moins une roue (17, 17') d'entraînement de rattrapage est couplée directement à l'arbre (16) d'entraînement par une roue libre (17a) de rattrapage et la au moins une roue (18, 18') d'entraînement de rappel est couplée par une roue libre (18a) de rappel et par une unité (20) de transmission à l'arbre (16) d'entraînement, l'unité (20) de transmission étant constituée pour l'inversion du sens de rotation.

6. Dispositif (10) suivant la revendication 5, **caractérisé en ce que** l'unité (20) de transmission est un train épicycloïdal.

7. Dispositif (10) suivant la revendication 5 ou 6, **caractérisé en ce que** l'élément (26, 26') d'entraînement est constitué pour la transformation d'un mouvement de pivotement en un mouvement suivant une course linéaire.

8. Dispositif (10) suivant la revendication 6, **caractérisé en ce que** l'élément (26) d'entraînement a au moins une denture (27) de rattrapage comme liaison d'action avec la au moins une roue (17) d'entraînement de rattrapage et une denture (28) de rappel comme liaison d'action avec la au moins une roue (18) d'entraînement de rappel.

9. Dispositif (10) suivant la revendication 7, **caractérisé en ce que** l'élément (26) d'entraînement a au moins une denture (27) de rattrapage et **en ce que** le dispositif (10) de rattrapage d'usure a au moins une roue (30) d'entraînement pouvant passer d'un état dans un autre état, qui, dans le un état, est en liaison d'action avec la au moins une roue (18') d'entraînement de rappel, et dans l'autre état, en liaison d'action avec la au moins une roue (17') d'entraînement de rattrapage, la au moins une roue (30) d'entraînement commutable étant constamment en liaison d'action avec la au moins une denture (27) de rattrapage de l'élément (26) d'entraînement.

10. Dispositif (10) suivant la revendication 9, **caractérisé en ce que** la au moins une roue (30) d'entraînement commutable est couplée à un élément (31) de commutation, qui est en liaison d'action avec l'élément (26') d'entraînement.

11. Dispositif (10) suivant la revendication 10, **caractérisé en ce que** l'élément (26') d'entraînement a une denture (27)de rattrapage comme liaison d'action avec la au moins une roue (30) d'entraînement et une rainure (26'g) de guidage en liaison d'action avec l'élément (31) de commutation.

12. Frein (1) à disque, de préférence à actionnement par l'air comprimé, notamment pour un véhicule automobile, comprenant un dispositif de serrage, ayant de préférence un levier (8) tournant de frein, au moins une unité (5, 5') de broche et au moins un dispositif (10) de rattrapage d'usure, qui est couplé au dispositif de serrage, de préférence au levier (9) tournant de frein, et dans lequel est inséré la au moins une unité (5, 5') de broche du frein (1) à disque, **caractérisé en ce que**
le au moins un dispositif (10) de rattrapage d'usure est un dispositif (10) de rattrapage d'usure bidirectionnel suivant l'une des revendications précédentes.
